Europäisches Patentamt

European Patent Office

Office européen des brevets

(11) Veröffentlichungsnummer: **0 293 494**
**B1**

(12) **EUROPÄISCHE PATENTSCHRIFT**

(45) Veröffentlichungstag der Patentschrift: **06.02.91**

(21) Anmeldenummer: **88900264.8**

(22) Anmeldetag: **05.11.87**

(86) Internationale Anmeldenummer:
**PCT/SU87/00125**

(87) Internationale Veröffentlichungsnummer:
**WO 88/04826 30.06.88 Gazette 88/14**

(51) Int. Cl.⁵: **G 11 B 25/02, G 11 B 17/26**

(54) SPEICHERVORRICHTUNG MIT SICH BEWEGENDEN INFORMATIONSTRÄGERN.

(30) Priorität: **15.12.86 SU 4157164**

(43) Veröffentlichungstag der Anmeldung:
**07.12.88 Patentblatt 88/49**

(45) Bekanntmachung des Hinweises auf die
Patenterteilung:
**06.02.91 Patentblatt 91/06**

(84) Benannte Vertragsstaaten:
**AT BE CH DE FR GB IT LI LU NL SE**

(56) Entgegenhaltungen:
**EP-B-0 033 052
DE-C-2 721 334
GB-A-2 151 066
US-A-4 470 137
US-A-4 519 061**

(73) Patentinhaber: **INSTITUT PROBLEM
MODELIROVANIA V ENERGETIKE AKADEMII
NAUK UKRAINSKOI SSR
pr. Pobedy, 56
Kiev, 252680 (SU)**

(72) Erfinder: **PETROV, Vyacheslav Vasilievich
ul. Montazhnikov, 104
Kiev, 252069 (SU)**
Erfinder: **ANTONOV, Alexandr Alexandrovich
pr. Vernadskogo, 85-64
Kiev, 252142 (SU)**
Erfinder: **TOKAR, Alexandr Petrovich
pr. Korneichuka, 30-161
Kiev, 252205 (SU)**
Erfinder: **BORISOV, Alexandr Vasilievich
ul. Kotelnikova, 89-115
Kiev, 252179 (SU)**

(74) Vertreter: **Eitle, Werner, Dipl.-Ing. et al
Hoffmann, Eitle & Partner Patentanwälte
Arabellastrasse 4
D-8000 München 81 (DE)**

Courier Press, Leamington Spa, England.

**Beschreibung**

Die Erfindung bezieht sich auf die Rechentechnik, Einrichtungen zur Informationsaufzeichnung, -lesung und -speicherung und betrifft insbesondere Speicher mit beweglichen Informationsträgern.

Es ist ein optischer Speicher mit optischen Platten (6-th IEE Symp. Mass, Storage System, Vail Cole, 4—7 June, 1984, Dig. Pap. Silver Spring. Md., C. I. Ammon, I. H. Hoover. A 10$^{13}$ bit optical disc juke box system, p. 61—65) bekannt, der eine Schreib-Leseeinheit und einen Mechanismus zum automatischen Wechsel von optischen Platten umfaßt. Deren Einsatz in die Schreib-Leseeinheit, das Versetzen der Platte in Drehung und die Suche nach der benötigten Informationsspur laufen zeitlich nacheinander ab und stellen einen lang andauernden Vorgang dar.

Es ist ein optischer Speicher ("Mini-Micro Systems", June 1984, "DOC data plans to make 6000 M-byte optical-tape cassette, Keith Jones, p. 98—101) bekannt, der eine optische Schreib-Leseeinheit und eine Einrichtung zum Speichern und Wechseln von Informationsträgern aufweist, die 100 Kassetten mit einem Band zur optischen Informationsaufzeichnung umfasst.

In dieser Einrichtung ist aber die Zugriffszeit zur Information gross, denn für die Auswahl des gewünschten Informationsbestandes gilt es, den Karusselbandpspeicher in eine vorgegebene Stellung zu bringen, eine Bandkassette aus diesem herauszuholen, sie in die Schreib-Leseeinheit einzusetzen und das Band laufen zu lassen, bis der gewünschte Abschnitt erreicht worden ist.

Ferner ist durch die GB—PS 21 51 066 eine optische Speichervorrichtung bekannt. Bei dieser Vorrichtung fallen die Laserlicht-Strahlen jedoch nicht senkrecht auf die Oberfläche der Informationsträger, sondern in von der Senkrechten abweichenden Winkeln, wie dies in Fig. 6 der genannten Druckschrift dargestellt ist; bereits insofern entspricht der Inhalt der genannten Druckschrift nicht der Gattung des Patentanspruchs 1. Ein weiterer Unterschied besteht darin, daß sich die einzelnen Informationsträger nach der vorliegenden Erfindung sowohl während des Aufzeichnens als auch während der Wiedergabe dauernd drehen, während die Informationsträger beim genannten Stand der Technik sich erkennbar nur absatzweise fortbewegen.

Der Erfindung liegt die Aufgabe zugrunde, einen Speicher mit beweglichem Informationsträger zu schaffen, in dem durch konstruktive Ausführung des Informationsträgers und der Einrichtung zum Speichern und Auswechseln von Informationsträgern eine zeitliche Koinzidenz der Vorgänge der Suche und Unterbringung des Informationsträgers in der Schreib-Leseeinheit sowie der Suche des erforderlichen Abschnitts des Informationsträgers erreicht wird.

Die gestellte Aufgabe wird durch die Merkmale des Patentanspruchs gelöst.

Es ist zweckmässig, die Einrichtung zum Speichern und Wechseln von Informationsträgern in Form eines zylindrischen Rotors auszuführen, an dessen Umfang die zylindrischen Informationsträger angebracht sind.

Es ist auch zweckmässig, die Schreib-Leseeinheit innerhalb der Einrichtung zum Speichern und Wechseln von Informationsträgern unterzubringen.

Derartige Ausführung des Speichers mit beweglichen Informationsträgern sorgt für eine zeitliche Koinzidenz der Vorgänge der Suche und der Unterbringung des Informationsträgers in der Schreib-Leseeinheit sowie der Suche des erforderlichen Abschnitts des Informationsträgers, weil für die Auswahl eines benötigten Informationsbestandes der gewählte Informationsträger in die Schreib-Leseeinheit durch Drehen des zylindrischen Rotors um den erforderlichen Winkel, an dessen Umfang die Informationsträger angeordnet sind, einzusetzten und die Schreib-Leseeinheit gleichzeitig damit auf den erforderlichen Abschnitt des Informationsträgers einzustellen ist, was die Zugriffszeit zur Information reduziert. Die Unterbringung der Schreib-Leseeinheit innerhalb der Einrichtung zum Speichern und Wechseln von Informationsträgern verringert die Abmessungen der Einrichtung.

Die Erfindung wird durch die nachstehende Beschreibung von zwei Ausführungsbeispielen anhand der beiliegenden Zeichnungen erläutert. Es zeigt:

Fig. 1 die Gesamtansicht eines erfindungsgemässen Speichers mit beweglichen Informationsträgern;

Fig. 2 die Draufsicht auf den Speicher nach Fig. 1 entsprechend dem Pfeil A in Fig. 1.

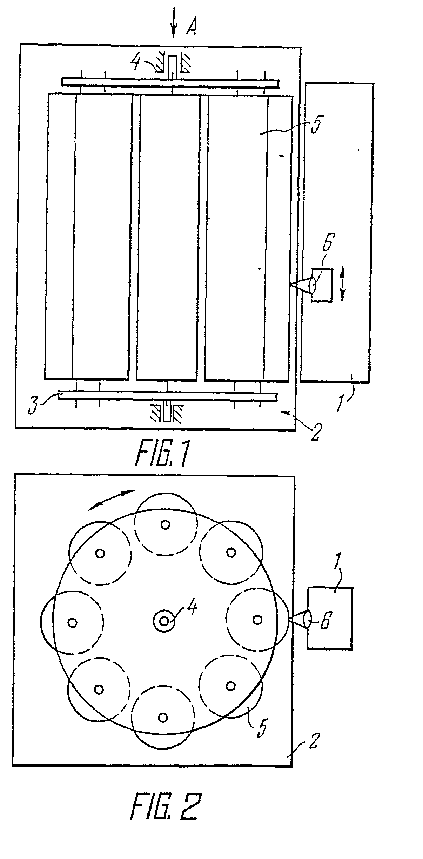

Der Speicher mit beweglichen Informationsträgern enthält eine Schreib-Leseeinheit 1 (Fig. 1) und eine Einrichtung 2 zum Speichern und Wechseln von Informationsträgern, die in Form eines mittels Lager 4 gelagerten zylindrischen Rotors 3 ausgeführt ist, an dessen Umfang zylindrisch ausgebildete Informationsträger 5 angebracht sind. Die Informationsträger 5 sind in der Einrichtung 2 zum Speichern und Wechseln von Informationsträgern mit Möglichkeit einer Umdrehung um ihre Achsen angeordnet. Die Schreib-Leseeinheit 1 mit einem Schreiblesekopf 6 ist für die Aufzeichnung und Ablesung von auf der Oberfläche des jeweiligen Informationsträgers 5 befindlichen Informationen bestimmt und kann in einer bekannten Schaltung ausgeführt werden, wie sie in der als Analogon geltenden Einrichtung zum Einsatz gelangt.

Um die Abmessungen der Einrichtung geringer zu halten, kann die Schreib-Leseeinheit 1 innerhalb der Einrichtung 2 zum Speichern und Wechseln von Informationsträgern untergebracht werden.

Die Einrichtung arbeitet wie folgt. Die Informationsträger 5 werden durch einen in der Einrichtung 2 zum Speichern und Wechseln von Informationsträgern angeordneten Antrieb (in der Zeichnung nicht angedeutet) mit Hilfe eines Antriebs des Rotors 3 in Drehung versetzt, der ausserhalb der Einrichtung zum Speichern und Wechseln von Informationsträgern liegt. Der gewählte Informationsträger 5 wird unter den Schreiblesekopf 6 der Schreib-Leseeinheit 1 gesetzt. Die erforderliche Informationsspur wird auf dem Informationsträger 5 durch Bewegung des Kopfes 6 gewählt. Da bei einer ersten Ausführungsform sämtliche Informationsträger 5 rotieren, genügt es für die Auswahl der gewünschten Information, mit Hilfe des Drehantriebs des zylindrischen Rotors 3, am dessen Umfang die Informationsträger 5 angeordnet sind, durch dessen Drehen um den erforderlichen Winkel den gewählten Informationsträger 5 unter den Schreiblesekopf 6 zu bringen und diesen auf die erforderliche Informationsspur zu stellen, wobei die beiden Bewegungen zur gleichen Zeit erfolgen können.

Bei einer zweiten Ausführungsform der Erfindung drehen sich nur der in Arbeitsstellung befindliche und der als nächster in diese Stellung zu bewegende Informationsträger.

Die Anordnung der rotierenden Informationsträger 5 zylindrischer Form in der Einrichtung 2 zum Speichern und Wechseln von Informationsträgern, die in Form des zylindrischen Rotors 3 ausgebildet ist, gestattet es, die Vorgänge der Auswahl des erforderlichen Informationsträgers und der Auswahl der Informationsspur zeitlich zusammenfallen zu lassen und die Zeit zu eliminieren, die für das Versetzen des Informationsträgers in Drehung benötigt wird, wodurch die Zugriffszeit zur Information reduziert wird.

Die Anordnung der Schreib-Leseeinheit 1 innerhalb der Einrichtung 2 zum Speichern und Wechseln von Informationsträgern erlaubt es, die Abmessungen des Speichers mit beweglichem Informationsträger zu verringern.

Die Erfindung kann auch in externen Speichern elektronischer Rechner, z.B. bei der Organisation von Datenbänken, Informationsrechensystemen u.ä. eingesetzt werden.

## Patentansprüche

1. Optische Speichervorrichtung mit mehreren Informationsträgern und mit einer Aufzeichnungs- und Wiedergabeeinheit (1), deren Strahl senkrecht auf die Aufzeichnungsschicht eines Informationsträgers (5) auftrifft, sowie mit einer drehbaren Informationsträger-Transporteinrichtung (3), welche Einrichtung jeweils einen der Informationsträger (5) in Arbeitsstellung mit der Aufzeichnungs- und Wiedergabeeinheit (1) bringt, dadurch gekennzeichnet, daß die Informationsträger (5) als vollständige Zylinder ausgebildet sind, die auf der drehbaren Informationsträger-Transporteinrichtung (3) so angeordnet und angetrieben sind, daß sich zumindest der in Arbeitsstellung befindliche und der als nächster in diese Stellung zu bewegende Informationsträger (5) drehen.

2. Optische Speichervorrichtung nach Anspruch 1, dadurch gekennzeichnet, daß sich alle Informationsträger (5) ständig drehen.

## Revendications

1. Dispositif de mémoire ou mémorisation optique comprenant plusieurs supports de données et une unité d'enregistrement et de reproduction (1), dont le rayon incident est perpendiculaire à la couche d'enregistrement d'un support (5) de données ainsi qu'un dispositif de transport rotatif (3) du support (5) de données, lequel dispositif amène successivement un des suports de données en position de travail en regard de l'unité d'enregistrement et de reproduction (1), caractérisé en ce que les supports (5) de données sont constitués de cylindres complets, qui sont disposés et entraînés à rotation sur le dispositif de transport (3) du support de données de telle sorte qu'au moins le support (5) de données se trouvant en position de travail tourne, de même que celui qui doit être amené immédiatement après dans cette position.

2. Dispositif de mémoire selon la revendication 1, caractérisé en ce que tous les supports (5) de données sont soumis à une rotation continuelle.

## Claims

1. An optical memory device with a plurality of information carriers and with a recording and display unit (1), the beam of which strikes the recording layer of an information carrier (5) perpendicularly, and with a rotatable information-carrier conveying device (3) bringing one of the information carriers (5) into the operating position with the recording and display unit (1) in each case, characterized in that the information carriers (5) are constructed as complete cylinders arranged and driven on the rotatable information-carrier conveying device (3) in such a way that at least the information carrier (5) present in the operating position and the information carrier (5) to be moved into this position next rotate.

2. An optical memory device according to Claim 1, characterized in that all the information carriers (5) continuously rotate.

FIG. 1

FIG. 2

1